**Europäisches Patentamt**

**European Patent Office**

**Office européen des brevets**

(11) Veröffentlichungsnummer: **0 689 178 A1**

## (12) EUROPÄISCHE PATENTANMELDUNG

(21) Anmeldenummer: **95107445.9**

(22) Anmeldetag: **17.05.95**

(51) Int. Cl.[6]: **G08G 1/017**, G07B 15/00, G01S 13/42

(30) Priorität: **21.06.94 DE 4421573**

(43) Veröffentlichungstag der Anmeldung:
**27.12.95 Patentblatt 95/52**

(84) Benannte Vertragsstaaten:
**AT DE GB SE**

(71) Anmelder: **ANT Nachrichtentechnik GmbH**
**Gerberstrasse 33**
**D-71522 Backnang (DE)**

(72) Erfinder: **Göckler, Heinz, Dr. Ing.**

Elbinger Strasse 52
**D-71522 Backnang (DE)**
Erfinder: **Gebauer, Thomas, Dipl.-Ing.**
**Albrecht Bengel Strasse 1**
**D-71546 Aspach (DE)**

(74) Vertreter: **Thier, Heinz et al**
**ANT Nachrichtentechnik GmbH,**
**Patentabteilung,**
**Wernerstrasse 1**
**D-70469 Stuttgart (DE)**

(54) **Anordnung zum Empfangen von Signalen, die in einem vorgegebenen Gebiet sich bewegende Objekte aussenden**

(57) Eine solche Anordnung, die mit möglichst geringem Antennenaufwand die Signale einzelner Objekte (z.B. Fahrzeuge, die eine Gebührenabbuchung quittieren) mit hoher Sektion empfangen, besitzt eine aus mehreren Antennenelementen (A11, $AN_yN_z$) bestehende Antenne und eine Vorrichtung (MW, FFT), welche die einzelnen Empfangssignale ($x_{ki}$) der Antennenelemente (A11, $AN_yN_z$) derart wichtet und so zu mehreren Signalpfaden (1...M) zusammenfaßt, daß jeder von ihnen einer andere Signaleinfallsrichtung (BB, S) der Antenne zugeordnet ist. Außerdem sind Mittel vorhanden, welche diejenigen Signalpfade (1...M) selektieren, die Signalleistungsmaxima aufweisen, und diese Signalpfade einem oder mehreren Detektoren (DT1, DT2) zuführen.

Fig. 1

Die vorliegende Erfindung betrifft eine Anordnung zum Empfangen von Signalen, die in einem vorgegebenen Gebiet sich bewegende Objekte aussenden, wobei eine aus mehreren Antennenelementen bestehende Antenne und eine Vorrichtung vorhanden sind, welche die von den einzelnen Antennenelementen empfangenen digitalisierten Signale mit komplexen Wichtungsfaktoren bewertet, so daß die Signale der einzelnen Objekte getrennt voneinander detektiert werden können.

Eine derartige Anordnung ist aus der DE 42 28 658 A1 bekannt. Sie läßt sich z.B. vorteilhaft in einem automatischen Gebührenerfassungssystem im Straßenverkehr einsetzen, wobei die Empfangsanordnung von mehreren sich beliebig in einen vorgegebenen mehrspurigen Straßenabschnitt bewegenden Fahrzeugen ausgesendete Signale empfangen und auswerten kann. Es handelt sich dabei um Quittungssignale, welche bestätigen, daß das jeweilige Fahrzeug von seinem Geldguthaben den geforderten Betrag abgebucht hat.

Der Erfindung liegt nun die Aufgabe zugrunde, eine Anordnung der eingangs genannten Art anzugeben, die mit einem möglichst geringen Aufwand an Antennen die Signale der einzelnen Objekte mit hoher Selektion zuverlässig empfängt.

Erfindungsgemäß wird diese Aufgabe durch die Merkmale des Anspruchs 1 gelöst. Vorteilhafte Ausführungen der Erfindung gehen aus den Unteransprüchen hervor.

Die Empfangsanordnung der Erfindung vermag nicht nur die von den Objekten ausgesendeten Signale deutlich voneinander zu trennen, sondern auch die Einstrahlrichtungen der Signale zu bestimmen, so daß eine Ortung der einzelnen Objekte möglich ist.

Anhand einiger in der Zeichnung dargestellter Ausführungsbeispiele wird anschließend die Erfindung näher erläutert:

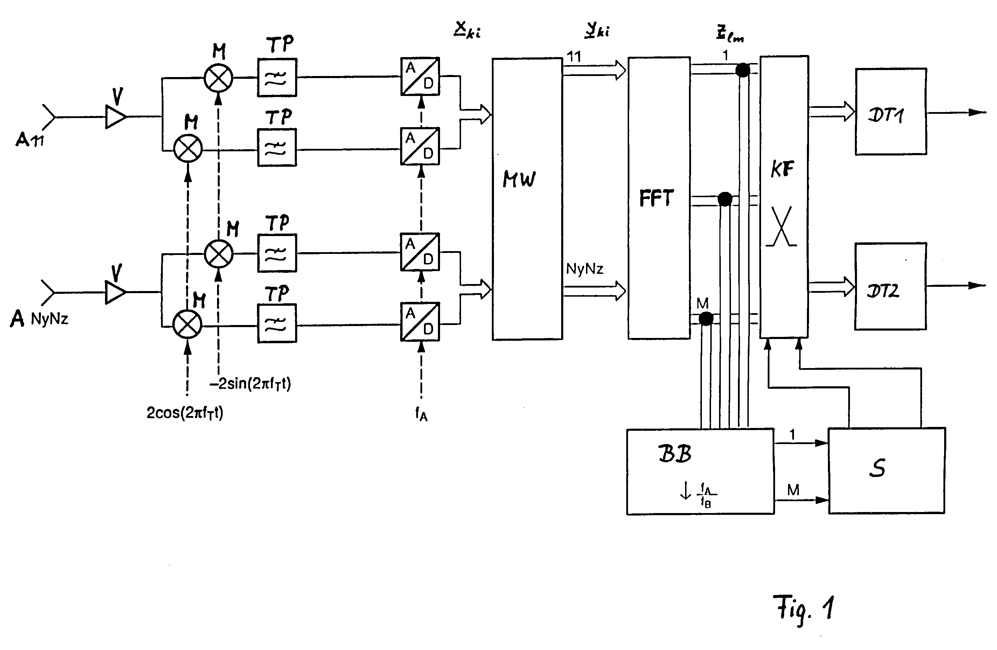

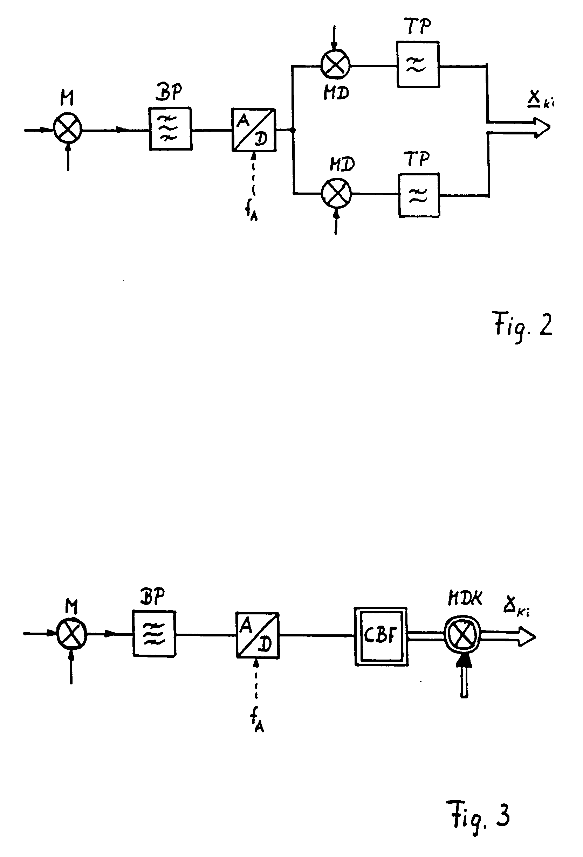

Figur 1 zeigt ein Blockschaltbild der Empfangsanordnung und Figur 2,3 zwei Varianten für die Umsetzung der Empfangssignale in komplexe digitale Signale.

Bei der in Figur 1 dargestellten Anordnung ist ein Antennenarray vorgesehen, das aus mehreren z.B. matrixartig angeordneten Antennenelementen A11 bis $AN_yN_z$ besteht, wobei $N_y$ die Zahl der Spalten und $N_z$ die Zahl der Zeilen angibt.

Nach einer Verstärkung V der von den einzelnen Antennenelementen empfangenen analogen Hochfrequenzsignale, werden diese zunächst auf eine Zwischenfrequenz herabgemischt und dann in komplexe digitale Signale $\underline{x}_{ki}$ ($k = 1...N_z$, $i = 1...N_y$) umgesetzt. Dieser Prozeß kann auf verschiedene Arten durchgeführt werden.

Gemäß Figur 1 wird jedes analoge Empfangssignal mit Mischern M in den Zwischenfrequenzbereich herabgemischt und in einen Inphase- und ein Quadratursignalanteil zerlegt. Danach werden die Signalanteile über Tiefpaßfilter TP geführt und mittels Analog/Digital-Umsetzer AD in ein digitales komplexes (Real-, Imaginärteil) Signal $\underline{x}_{ki}$ gewandelt.

Bei dem in Figur 2 dargestellten Ausführungsbeispiel wird jedes analoge Empfangssignal mit einem Mischer M in die Zwischenfrequenzebene herabgesetzt, über einen Bandpaß BP geführt und dann mit einem Analog/Digital-Umsetzer AD digitalisiert. Erst danach wird das Signal mit digital arbeitenden Mischern ins Basisband geschoben und in einen Inphase- und Quadraturanteil zerlegt, aus denen nach Tiefpaßfilterung TP das komplexe digitale Signal $\underline{x}_{ki}$ resultiert.

Gemäß Figur 3 wird nach der Analog/Digital-Umsetzung das reelle Bandpaßsignal auf ein komplexes Bandpaßfilter CBF gegeben, welches den bei reellen Signalen zur halben Abtastfrequenz periodischen Anteil wegfiltert. Das resultierende komplexe Signal wird mit einem komplexen digitalen Mischer MDK ins Bansisband verschoben.

Die in Figur 2 und 3 dargestellten digitalen Filter, können auch zur Reduzierung der Abtastfrequenz (Dezimation) eingesetzt werden.

Bei den zuvor beschriebenen Mischvorgängen ist darauf zu achten, daß die Phasendifferenzen zwischen den einzelnen Empfangssignalen, die durch verschiedene Laufzeiten der Signale von den sendenden Objekten zu den Antennenelementen entstehen, erhalten bleiben.

In einem Multipliziererschaltblock MW werden alle komplexen digitalen Empfangssignale $\underline{x}_{ki}$ mit reellen Wichtungskoeffizienten bewertet $W_{ki}$. Diese reellen Wichtungskoeffizienten $W_{ki}$ werden zweckmäßigerweise so gewählt, daß eine Antennenrichtcharakteristik entsteht, deren Hauptkeule normal zur Antennenebene gerichtet ist und deren Nebenkeulen ausreichend stark gedämpft sind. Dieser Normalenrichtungen werden der Azimutrichtungswinkel $\Theta = 0°$ und der Elevationsrichtungswinkel $\phi = 90°$ zugeordnet.

Sollten die einzelnen Antennenelemente kalibriert sein, so können in dem Multipliziererschaltblock MW die eingehenden Signale $\underline{x}_{ki}$ mit Kalibrationskorrekturfaktoren $\underline{K}_{ki}$ versehen werden. Die komplexen Ausgangssignale des Multipliziererschaltblocks MW sind dann:

$$\underline{y}_{ki} = W_{ki} \bullet \underline{K}_{ki} \bullet \underline{x}_{ki} \qquad\qquad (1)$$

In einer Transformationsstufe FFT werden die Signale $\underline{y}_{ki}$ mit Richtungsvektoren multipliziert und aufsummiert, so daß Signale $\underline{z}_{lm}$ entstehen, von denen jedes einer eignen Signaleinfallsrichtung der Antenne zugeordnet ist. Anders ausgedrückt, die Antenne bildet eine Vielzahl von Richtcharakteristiken, welche das gesamte Gebiet, in dem sich Signale aussendende Objekte aufhalten können, abdecken. Die Gewichtung der Signale $\underline{y}_{ki}$ mit Richtungsvektoren kann z.B. mit Hilfe einer schnellen Fourier-Transformation oder einer diskreten Cosinus-Transformation oder mit einem FIR-Filter durchgeführt werden. Im vorliegenden Ausführungsbeispiel wird die schnelle Fourier-Transformation angewendet. Dabei ergeben sich M Signale $\underline{z}_{lm}$ mit M verschiedenen Einfallsrichtungen:

$$\underline{z}_{lm} = \sum_{i=0}^{N_y-1} \sum_{k=0}^{N_z-1} \underline{y}_{ki}\, e^{-j2\pi im/N_1}\, e^{-j2\pi kl/N_2} \qquad (2)$$

mit $l = 0,1,... N_2-1$ und $m = 0,1,...N_1-1$
und $N_1 \geq N_y$ , $N_2 \geq N_z$

Da von den resultierenden Signalen $\underline{z}_{lm}$ einige solchen Einfallsrichtungen zugeordnet sind, die völlig außerhalb des relevanten Gebiets liegen, können diese ausgeschlossen werden, so daß statt $M = N1\, N2$ nur noch

$$M \leq \frac{N_1\, N_2}{2}$$

Signale $\underline{z}_{lm}$ übrig bleiben. Zu jedem der Signale $\underline{z}_{lm}$ gehören ein Azimutrichtungswinkel $\Theta$ und ein Elevationsrichtungswinkel $\phi$, die sich allgemein folgendermaßen beschreiben lassen:

$$\phi = \begin{cases} \arccos \dfrac{-1}{N_2\, d_z/\lambda} & \text{für } 0 \leq l < \dfrac{N_2}{2} \\[3mm] \arccos \dfrac{N_2 - 1}{N_2\, d_z/\lambda} & \text{für } \dfrac{N_2}{2} \leq l < N_2 \end{cases} \qquad (3)$$

$$\Theta = \begin{cases} \arcsin \dfrac{m}{N_1\, \sin\Theta\, d_y/\lambda} & \text{für } 0 \leq m < N_y \cdot \dfrac{d_y}{\lambda} \sin\phi \\[3mm] \arcsin \dfrac{m - N_1}{N_1\, \sin\Theta\, d_y/\lambda} & \text{für } N_1 \left(1- \dfrac{d_y}{\lambda} \sin\phi\right) < m < N_1 \end{cases} \qquad (4)$$

$d_y/\lambda$ und $d_z/\lambda$ sind die gegenseitigen Abstände der Antennenelemente in Zeilen- und Spaltenrichtung bezogen auf die Wellenlänge der Empfangssignale.

Alle den jeweiligen Indizes l, m zugehörigen Winkel $\Theta$ und $\phi$ werden zweckmäßig in einer Tabelle abgespeichert, um den Rechenaufwand zu reduzieren. Sendet ein Objekt ein Signal aus einer Richtung, die einer abgespeicherten Winkelkombination $\Theta$, $\phi$ entspricht, so ist die Leistung des zu diesen Winkeln gehörenden Signals $\underline{z}_{lm}$ größer als die Leistung des gleichen Eingangssignal $\underline{y}_{ki}$, welches mit einem anderen Richtungsvektor multipliziert wurde. Es wird also von allen am Ausgang der Transformationsstufe

FFT anliegenden Signalen $\underline{z}_{Im}$, das Betragsquadrat $|\underline{z}_{Im}|^2 = \underline{z}_{Im} \cdot \underline{z}_{Im}$ gebildet. Außerdem wird die Summe aus zeitlich nacheinander ermittelten Betragsquadraten gemäß Gleichung (5) berechnet, so daß sich die bei der Analog/Digital-Umsetzung angewandte Abtastfrequenz $f_A$ um den ganzzahligen Faktor $f_A/f_B$ auf die neue Abtastfrequenz $f_B$ reduziert.

$$|\underline{z}_{1m}|^2 = \sum_{n=0}^{\frac{f_A}{f_B}-1} \underline{z}_{1m}(t-n)\,\overset{\bullet}{\underline{z}}_{1m}(t-n) \qquad (5)$$

Diese Reduktion der Abtastfrequenz ist möglich, wenn die Objekte nur langsame Ortsveränderungen erfahren im Vergleich zu den zeitlichen Änderungen der ausgesendeten Signale. Vorteil der Reduktion der Abtastfrequenz ist, daß sich der Rechenaufwand bei der anschließenden Selektion der Signale mit relativen Leistungsmaxima in der Schalteinheit S verringert.

In der Schalteinheit S wird zunächst aus allen M Signalen $\underline{z}_{Im}$ dasjenige mit dem absoluten Leistungsmaximum ermittelt. Danach wird das Betragsquadrat $|\underline{z}_{Im}|^2$ daraufhin untersucht, ob es größer als ein Schwellwert $T \cdot P_N$ ist, wobei $P_N$ das Systemrauschen ist und für T z.B. gilt:

$$T = \frac{\sin\left(\dfrac{\pi}{2}\dfrac{N_y-1}{N_y}\right)\sin\left(\dfrac{\pi}{2}\dfrac{N_z-1}{N_z}\right)}{\sin\dfrac{\pi}{2N_y}\qquad\sin\dfrac{\pi}{2N_z}} \qquad (6)$$

Dieser Wert für T ergibt sich, wenn im Multipliziererschaltblock alle reellen Wichtungskoeffizienten $W_{ki} = 1$ sind. Ist ein Signal $\underline{z}_{Im}$ als Maximum durch diese Schwellwertbetrachtung erkannt worden, wird es registriert und auf einen kleinen Wert unterhalb der Schwelle gesetzt. Die unmittelbar benachbarten Werte, deren Steigung zum Maximum hinzeigt (links vom Maximum positive Steigung, rechts vom Maximum negative Steigung) werden ebenfalls auf einen niedrigeren Wert gesetzt. Dadurch wird vermieden, daß weitere Maxima detektiert werden, die zu einem schon detektierten Objekt gehören. Danach wird das nächste Maximum bestimmt. Die Maximumsuche wird solange fortgeführt bis kein Maximum mehr oberhalb der Schwelle erkennbar ist.

Jedes Signal $\underline{z}_{Im}$ für das ein Maximum des Betragsquadrates ermittelt worden ist, wird über ein Koppelfeld KF auf einen von mehreren Detektoren DT1, DT2 durchgeschaltet, der die mit dem Signal $\underline{z}_{Im}$ übertragene Information detektiert.

**Patentansprüche**

1. Anordnung zum Empfangen von Signalen, die in einem vorgegebenen Gebiet sich bewegenden Objekte aussenden, wobei eine aus mehreren Antennenelementen bestehende Antenne und eine Vorrichtung vorhanden sind, welche die von den einzelnen Antennenelementen empfangenen digitalisierten Signale mit komplexen Wichtungsfaktoren bewertet, so daß die Signale der einzelnen Objekte getrennt voneinander detektiert werden können, dadurch gekennzeichnet, daß die Vorrichtung (MW, FFT) die einzelnen Empfangssignale ($x_{ki}$) der Antennenelemente (A11, A$N_yN_z$) derart wichtet und so zu mehreren Signalpfaden (1...M) zusammenfaßt, daß jeder von ihnen einer anderen Signaleinfallsrichtung der Antenne zugeordnet ist und daß Mittel (BB, S) vorhanden sind, welche diejenigen Signalpfade (1...M) selektieren, die Signalleistungsmaxima aufweisen, und diese Signalpfade (1...M) einem oder mehreren Detektoren (DT1, DT2) zuführen.

2. Anordnung nach Anspruch 1, dadurch gekennzeichnet, daß die Vorrichtung zur komplexen Wichtung der Empfangssignale aus einem Multipliziererschaltblock (MW) der jedes Empfangssignal ($x_{ki}$) mit einem reellen Wichtungskoeffizienten multipliziert, und aus einer daran angeschlossenen Transformationsstufe (FFT) besteht, die jedem Empfangssignal ($\underline{x}_{ki}$) einen Richtungsvektor zuordnet.

3. Anordnung nach Anspruch 2, dadurch gekennzeichnet, daß die Transformationsstufe (FFT) eine Fast-Fourier-Transformation durchführt.

4. Anordnung nach Anspruch 2, dadurch gekennzeichnet, daß die Transformationsstufe (FFT) eine diskrete Cosinus-Transformation durchführt.

5. Anordnung nach Anspruch 2, dadurch gekennzeichnet, daß die Transformationsstufe (FFT) ein FIR-Filter ist.

6. Anordnung nach Anspruch 1, dadurch gekennzeichnet, daß die Eingangsschaltung die einzelnen Empfangssignale auf eine niedere Frequenz phasenstarr heruntermischt und sie in digitalisierte komplexe Signale ($\underline{x}_{ki}$) umsetzt.

Fig. 1

EP 0 689 178 A1

M   BP   A/D   MD   TP   $\underline{X}_{ki}$

$f_A$

*Fig. 2*

M   BP   A/D   CBF   MDK   $\underline{X}_{ki}$

$f_A$

*Fig. 3*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | DE-A-39 09 874 (TELEFUNKEN SYSTEMTECHNIK) * Seite 4, Zeile 26 - Zeile 59 * --- | 1-6 | G08G1/017 G07B15/00 G01S13/42 |
| Y | EP-A-0 588 045 (ANT NACHRICHTENTECHNIK GMBH) * das ganze Dokument * --- | 1-6 | |
| A | US-A-4 947 176 (INATSUNE ET AL.) * das ganze Dokument * --- | 1-6 | |
| A | US-A-4 656 479 (KIRIMOTO ET AL.) * Ansprüche * --- | 1-6 | |
| A | EP-A-0 578 060 (ANT NACHRICHTENTECHNIK GMBH) --- | | |
| A | WO-A-92 15978 (ANT NACHRICHTENTECHNIK GMBH) ----- | | |

**RECHERCHIERTE SACHGEBIETE (Int.Cl.6)**

G08G
G07B
G01S

Der vorliegende Recherchenbericht wurde für alle Patentansprüche erstellt

| Recherchenort | Abschlußdatum der Recherche | Prüfer |
|---|---|---|
| DEN HAAG | 11.Oktober 1995 | Reekmans, M |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes
    Dokument